# EUROPEAN PATENT APPLICATION

(11) **EP 1 455 524 A1**
(43) Date of publication of application: **08.09.2004**
(21) Application number: 04250533.9
(22) Date of filing: 30.01.2004
(51) Int. Cl.: H04N 5/225, H04N 7/14

(54) **Image transmission through mobile communication networks**

(30) Priority: 05.03.2003 KR 2003013818
(71) Applicant: Samsung Electronics Co., Ltd., Suwon-si, Gyeonggi-Do 442-742 (KR)
(72) Inventor: Chu, Gil-hwoan, 211-1103, Shinchang Mission Hill, Yongin-si, Gyonggi-do (KR)
(74) Representative: Geary, Stuart Lloyd

(57) **Abstract**

An image transmission apparatus and method using a CDMA communication network are disclosed. The apparatus for transmitting an image captured by a camera to a wireless terminal of a user by means of a mobile communication network, includes an image input unit for receiving an image signal from outside, an image conversion unit for converting an image outputted from the image input unit into a form receivable by the wireless terminal, and a wireless data transmission/reception unit for receiving an image request signal, restructuring the signal outputted from the image conversion unit into a small packet unit and transmitting the packet to the terminal of the user. By transmitting the image data in small packet units instead of transmitting it at once, the image data can be transmitted even with a CDMA wireless modem of a small capacity.

## Description

The present invention relates to a method and apparatus for converting an image captured by a camera into a digital signal, then transmitting the converted digital signal via a network, such as a code division multiple access (CDMA) network, for display on screens of portable wireless terminals such as cell phones or PDA's. The present invention also enables users to monitor the image captured by a camera through a wireless device from a remote place.

A message can be sent through a conventional mobile communication system by entering a short message into a mobile communication terminal or a web site. The entered the message is then transmitted to a messaging server, providing a mobile communication service. The transmitted message is stored in a message storage space of a receiver. When the fact that the message has arrived is notified to the receiver through a mobile communication network, the receiver enables a call path to be set up between the messaging server and the receiver's wireless terminal. Accordingly, the receiver can receive the short message.

A video may be sent or received through a system having a suitable messaging service. The performance and screen display functions of wireless terminals such as mobile phones and PDAs have been improved. Since images can be converted, compressed and transmitted in a remote digital imaging method by means of mobile phones or PDAs, users can view an image captured by a camera, installed in a remote place, by means of the wireless terminals.

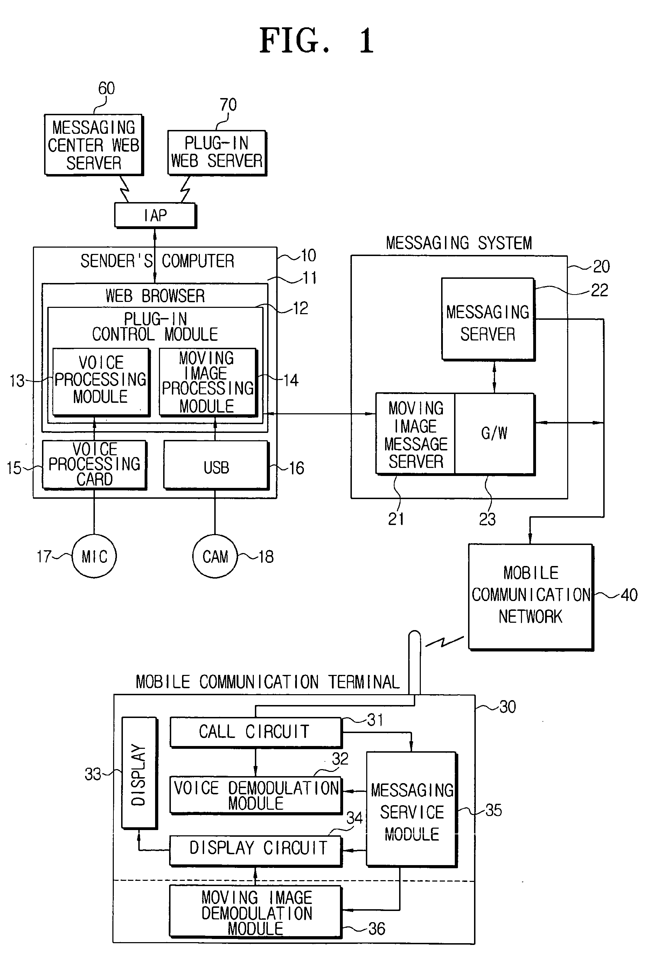

A conventional messaging service system is shown in Figure 1.

Referring to Figure 1, the messaging service system includes a sender's computer 10, a messaging system 20, a mobile communication terminal 30, conventional mobile communication equipment and web servers 60, 70. The messaging centre web server 60 includes web servers hosting web sites providing a video messaging service through the Internet. The sender's computer 10 can interact with the messaging centre web server 60 by means of a web browser 11 and may go through steps such as member registration and authentication, and so on. In this case, by means of an implied or express method, users receive a URL directing them to a plug-in such as an Active-X control (Microsoft Corp.) or a Java applet from the web server 60. The plug-ins are programs that enable use of the video messaging service. As is known in the art, such plug-ins may exist at many locations on the Internet and Figure 1 shows a representative server 70 which provides the plug-ins.

The sender's computer 10 includes a microphone 17, a sound card or voice processing card 15, a video camera 18 and a camera interface 16, such as a USB port. A video processing module 14 decimates colour image data and reduces the resolution of the colour image. Furthermore, the video processing module 14 converts the colour image data into a grey scale image with either two or four levels, then performs additional signal compression processing. An audio processing module 13 receives audio data from a device driver for the sound card or voice processing card 15 and encodes the audio data such that it can be decoded with the audio codec of a conventional mobile communication terminal. The video and audio signals, processed as described above, are converted into video message information, which comprises a data packet having a predetermined size, together with control information, such as control data including the recipient's phone number and lip sync control data, for reproducing the video and audio signals. The video and audio signals are transmitted to a video message server 21 through a plug-in control module.

The messaging system 20 includes a messaging server 22, know as an SMS centre (SMSC) and a gateway 23, know as an IWF (inter-working function). The mobile communication network 40 is a well-known system component. The video message server 21 stores video message information in memory regions allocated to respective recipients. The video message server 21 requires that a conventional messaging server 22 notify the recipients mobile communication terminal 30 of the arrival of a video message. The video message server 21 transmits the video message information, after user authentication, when the recipient sets up a call path. The messaging server 22 may utilize the existing SMS. According to the SMS method, a user knows when a message has arrived by a beep, or other notification, and sets up a data mode call between the video message server 21 and their mobile communication terminal 30 by pressing appropriate keys. Next, the user selects a message from among a given list and receives the selected information from the video message server 21.

The mobile communication terminal 30 includes a call circuit 31, including an audio demodulation module 32, a display 33, a display circuit 34 and a messaging service module 35, and is a well-known type of terminal. When a message is received by means of the call circuit 31, the messaging service module 35 receives the message. Audio information from the received message is demodulated by means of the audio demodulation module 32, thereby enabling the demodulated audio information to be output to a speaker. The messaging service module circuit 35 enables video information to be demodulated by means of a video demodulation module 36. The demodulated video information is written to the display memory of the display 33, through the display circuit 34, thereby enabling the video information to be displayed.

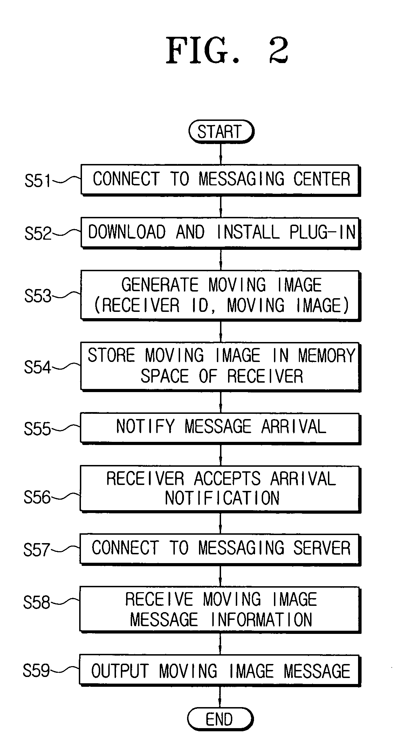

Figure 2 is a flowchart illustrating a method of transmitting and receiving a video message.

Referring to Figure 2, a user controls their computer 10 to interact with the messaging centre web server 60 (step S51). The messaging centre web server 60 may exist anywhere on the Internet or be provided by a plurality of service providers. The sender's computer 10 is directed to a plug-in web server 70 by means of commands encoded in a web page send from the messaging centre web server 60. The plug-ins provided by the plug-in web server 70 being necessary for use of the system. The sender's computer requests and downloads a plug-in control module 12, such as Active-X control (step S52). Then, the user enables records a video using the camera 18 and the microphone 17 installed on the their computer 10 (step S53). The recorded video is transmitted to the video message server 21.

The video message server 21 may be the same server as the messaging centre web server 60 or a plurality of video message servers 21 may exist. The video message server 21 divides a memory space into a plurality of regions allocated to respective recipients and stores messages for a predetermined period, such as one month. Accordingly, the message from the computer 10 is stored in the appropriate memory region (step S54). Then, the video message server 21 requests the messaging server 22 to notify the recipient of the arrival of the message through the mobile communication network 40, according to a messaging protocol such as SMS, ISMS or WAP (step S55). However, the mobile communication terminal 30 receives a shortened arrival notification information rather than the entire video message (step S56). Accordingly, in order to receive a entire message, the mobile communication terminal 30 is connected to the messaging server in a data communication mode through the mobile communication network (step S57), and then receives the video message (step S58) and reproduces it frame by frame.

However, in transmitting the video message information, the message may be transmitted as one message or by individual image frames. When the video message information is transmitted in one message, a selected entire message is downloaded while a communication channel is open. Also, the mobile communication terminal 30 stores the downloaded video message information in a memory, and then obtains access to the memory, thereby reproducing the video message information. Accordingly, this method is problematic in that sufficient memory space needs to be provided in the mobile communication terminal.

The method of transmitting the video message information by image frames is applicable when the memory capacity of a mobile communication terminal is insufficient for the whole and the condition of the call path is relatively good. Within the limits of the bandwidth of a wireless communication, a server transmits a selected message frame by frame and a reception side receives the selected message in real time and reproduces the received message. However, the transmission unit is restricted by the conditions of reproduction, such as the bandwidth of the wireless communication and the memory space of the terminal.

Furthermore, compared to a wired data transmission method, this wireless data transmission method has a strong likelihood of data loss, data corruption and transmission errors occuring. As the amount of data to be transmitted grows larger, the likelihood that such errors will occur becomes higher.

An image transmission apparatus for transmitting an image captured by a camera to a wireless terminal of a use via a mobile communication network comprises an image input unit adapted to receive an image signal. The apparatus further comprises an image conversion unit for converting an image received from the image input unit into a form receivable by a wireless terminal. The apparatus further includes a wireless data unit adapted to restructure the image data received from the image input unit, into at least one small packet unit, and to transmit the at least one small packet unit to the terminal of a user. The wireless data unit is preferably capable of tranmitting and receiving over a CDMA network. The packet size is preferably less than 1 kb.

A method according to the present invention comprises receiving an image signal, converting the image signal into a form which is receivable by the wireless terminal, and restructureing the converted image signal into at least one small packet unit. The method further includes the step of transmitting the at least one small packet unit to the terminal of a user. The method preferably includes the step of receiving an image request signal, and performing the restructuring step based on the received image request signal.

An embodiment of the present invention will now be described, by way of example, with reference to Figures 3 to 6 of the accompanying drawings, in which:
Figure 1 shows a conventional messaging service system;
Figure 2 is a flowchart illustrating a conventional video message transmitting and receiving method;
Figure 3 is a schematic block diagram of a data transmission/reception apparatus according to the present invention;
Figure 4 illustrates the packet structure of a short message service message according to the present invention;
Figure 5A illustrates a packet structure for transmitting image data according to the present invention;
Figure 5B illustrates a packet structure for notifying a result after receiving image data according to the present invention; and
Figure 6 is a flowchart illustrating the operation of the data transmission/reception apparatus of Figure 3.

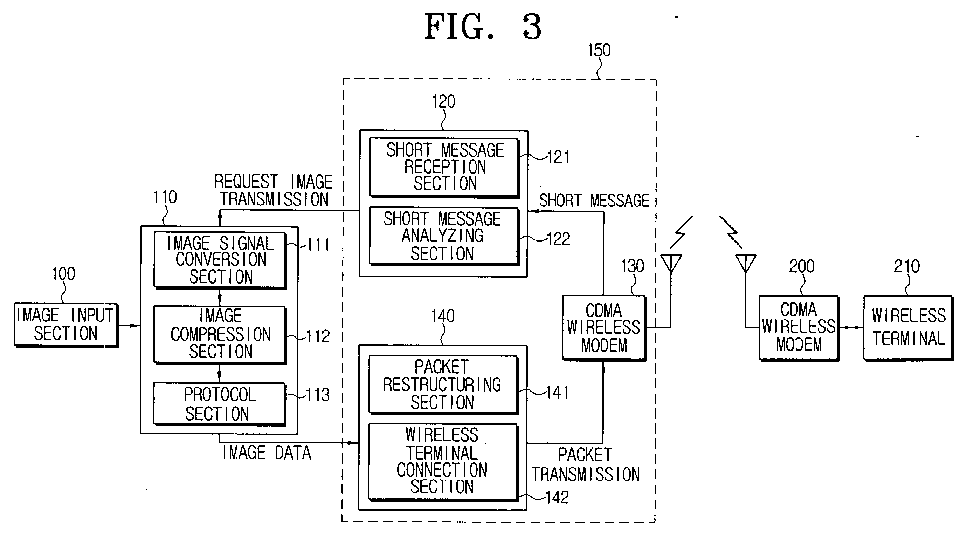

Referring to Figure 3, an apparatus, according to the present invention, for transmitting images from a camera to a wireless terminal by means of a mobile communication network, includes a image transmission unit and an image reception unit. The image transmission unit includes an image input unit 100, an image conversion unit 110 and a wireless data transceiver unit 150. The image reception unit includes a CDMA wireless modem 200 and a user's wireless terminal 210.

The image input unit 100 receives an analog image signal from an external camera and outputs it to the image conversion unit 110. The image conversion unit 110 receives an image transmission request signal from the wireless data transceiver unit 150, for converting the input image signal into an image data, which can be received by the wireless terminal, then outputting the converted image data to the wireless data transceiver unit 150.

The wireless data transceiver unit 150 receives an image request signal from the user's wireless terminal 210 and outputs the image request signal to the image conversion unit 110. The wireless data transceiver unit 150 restructures the input image data into a small packets and transmits the packets to the user's wireless terminal.

The image conversion unit 110 includes an image signal conversion unit 111, an image compression unit 112 and a protocol section 113. The image signal conversion unit 111 converts the analogue signal into a digital signal. The image compression unit 112 converts the digital image signal into a signal having a form which can be handled by the wireless terminal, and compresses it. The protocol section 113 converts the signal from the image compression unit 112 into image data into a format suitable for the protocol supported by the wireless terminal.

The wireless data transceiver unit 150 includes a CDMA wireless modem 130, a short message receiving unit 120 and an image data transmission unit 140. The CDMA wireless modem 130 receives a short message of the wireless terminal 210 transmitted from the CDMA wireless modem 200 of the user side, and transmits the image data from the image conversion unit 110 to the user's wireless terminal. The short message receiving unit 120 extracts wireless terminal information from the short messages output from the CDMA wireless modem 130, and transmits the image transmission request signal to the image conversion unit 110. The image data transmission unit 140 receives the image data from the image conversion unit 110, restructures the image data into smaller packets, and then outputs the packets to the CDMA wireless modem 130.

The short message receiving unit 120 includes a short message reception section 121 and a short message analyzing section 122. The short message reception section 121 receives the short message from the CDMA wireless modem 130. The short message analyzing section 122 extracts the user side wireless terminal information from the received short message. The wireless terminal information includes the phone number of the CDMA wireless modem 200 and the image type and screen size supported by the wireless terminal 210.

The image data transmission unit 140 includes a packet restructuring section 141 and a wireless terminal connection section 142. The packet restructuring section 141 restructures the received image data into small packet units, so as to reduce file transmission errors, and so as to improve retransmission efficiency when a transmission error occurs. The wireless terminal connection section 142 outputs the restructured data to the CDMA wireless modem 130.

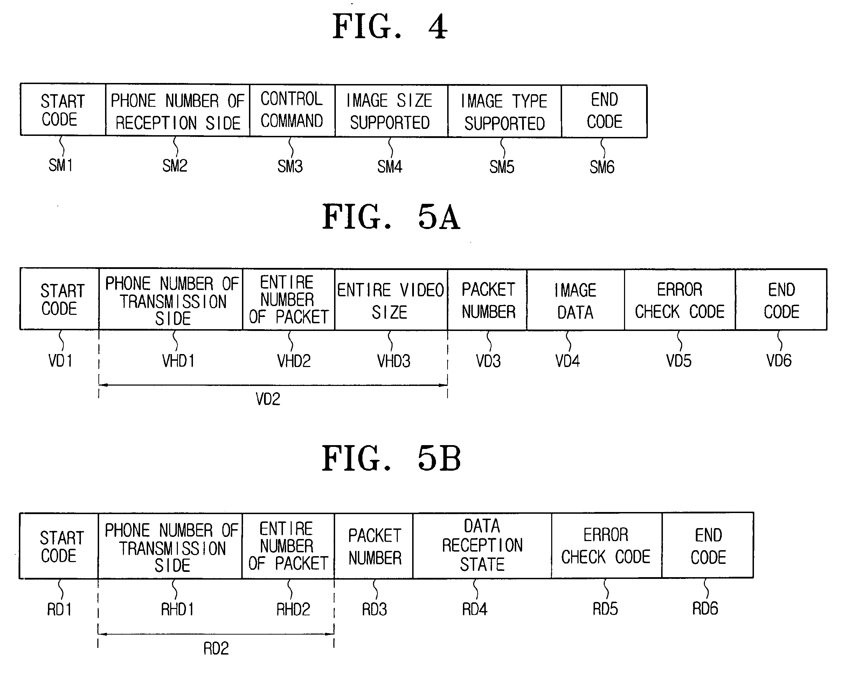

Referring to Figure 4, a short message for requesting image transmission includes a start code, the recipient's phone number, a control command, the image size supported, the image type supported and an end code.

The start code SM1 indicates that the received short message is a short message for requesting image transmission. The phone number SM2 is the phone number of the recipient CDMA wireless modem 200. The control command SM3 may include a first command and a second command. The first command requests transmission of an image captured by a camera. The second command selects the camera, which is to transmit the image, when a number of cameras are installed with the image transmission unit. The image size supported SM4 is a code representing the display window size (e.g. 320 X 240 pixels) of the wireless terminal 210, in order to prevent the size of the image from exceeding the display window size. The image type supported SM5 is a code used when the image captured by the camera is compressed according to an image type such as WBMP or JPG or the like, which is supported by the wireless terminal 210 of user. The end code SM6 is a code for identifying of the end of the short message.

The image transmission side, which receives a short message requesting image transmission, as described above obtains the phone number of the image requesting user's wireless terminal from the start code SM1 and phone number SM2 included in the short message. The image transmission side obtains the image transmission request from the user and desired camera information by analyzing the control command SM3. From the image size supported SM4 and the image type supported SM5, the image transmission side extracts size and image type of the transmitted image.

Referring to Figure 5A, the transmitted image packets each include a start code VD1, a data transmission packet header VD2, a packet number VD3, image data VD4, an error check code VD5 and an end code VD6. The data transmission packet header VD2 includes the phone number VHD1 of the transmitting side, an total number of packets VHD2 carrying the current image and the image size VHD3.

In the above structure, the start code VD1 and the end code VD6 mark the start and end of an image data packet. The phone number VHD1 is the phone number of the CDMA wireless modem 130 on the transmission side. The number of packets VHD2 is the number packets carrying the current image. The entire image size VHD3 refers to the entire size of the image data. The packet number VD3 indicates where, in the sequence of packet carrying the current image, to current packet comes. When a transmission error has occurred, the lost or corrupted packet is identified from its packet number VD3 or the absence of its packet number from the collection of received packets. Consequently, a request for retransmission of lost or corrupted packets can be made. Accordingly, the image reception unit can recover the entire image using small packets. The image data VD4 is the actual image data from the camera. The error check code VD5 is a code for determining whether an error has occurred in the image data VD4.

Referring to Figure 5B, acknowledgement packets, sent back to the transmitting side, each include a start code RD1, a data response packet header RD2, a packet number RD3, a data reception state RD4, an error check code RD5 and an end code RD6. The data response packet header RD2 includes the phone number RHD1 of the recipient and the number of packets RHD2.

In the above packet structure, the start code RD1 and the end code RD6 mark the start and end of the response data packet. The phone number RHD1 is the phone number of the CDMA wireless modem 200 of the reception side, which sent the response. The number of the packets RHD2 is the number of packets over which the image data was transmitted. The packet number RD3 refers to the sequence number of the current packet. When a transmission error has occurred, only the lost or corrupted packets need to be retransmitted because the sequence number enables the lost and corrupted packets to be identified. The data reception state RD4 refers to whether a corresponding image data packet has been received well by the reception unit and whether a transmission error has occurred. The error check code RD5 is a code for checking whether there is something wrong in the data reception state RD4.

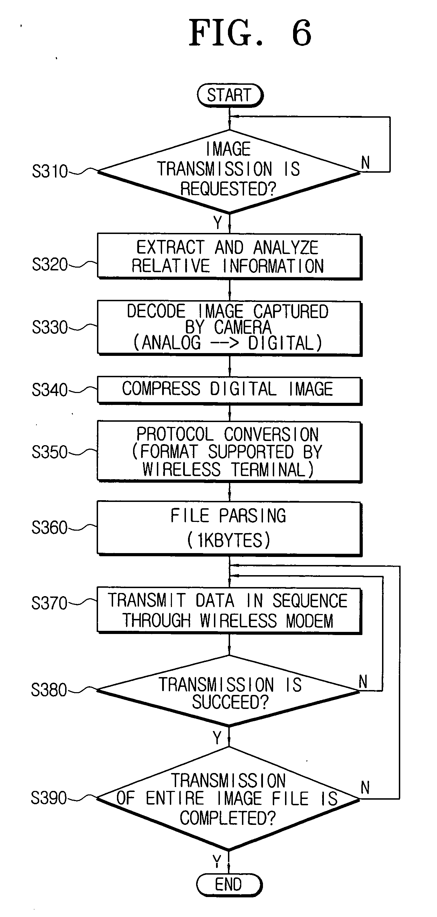

Referring to Figure 6, during operation of the apparatus shown in Figure 3, it is first determined whether the image transmission unit has received an image transmission request from the image reception unit (step S310). If the image transmission unit has received an image transmission request, the short message receiving unit 120 extracts related data from the received short message and analyses the extracted data (step S320). In these steps, several pieces of information, including the phone number of the CDMA wireless modem on the reception side and the image size/type supported by the wireless terminal on the reception side, are extracted from the short message as shown in Figure 4.

The short message receiving unit 120 outputs the extracted information and the image transmission request signal to the image conversion unit 110. The image conversion unit 110 converts the image and compresses the converted image, and outputs the compressed image to the image data transmission unit 140.

The above-mentioned step will now be described in more detail. The image signal conversion unit 111 of the image conversion unit 110 converts the analogue signal input from a camera into a digital signal (step S330). On the basis of the extracted information, the image compression unit 112 converts the converted digital image signal into a signal having a format which can be received by the wireless terminal, and also compresses it (step S340). The protocol section 113 transmits the suitably formatted image data to the image data transmission unit 140 (step S350).

The packet restructuring section 141 of the image data transmission unit 140 receives the image data from the image conversion unit 110 and restructures the image data into the packet structure shown in Figure5A (step 360). The packets with this structure are then sent to the CDMA wireless modem 130 (step S370).

It is preferable that the size of the image data packets be about 1K bytes in consideration of transmission effectiveness and stability.

When data is transmitted between wireless modems, a monitoring agent forcibly cuts off the connection if communication between the wireless modems has not been performed for a predetermined period of time. In order to transmit a large amount of data, first the wireless modem of the transmission unit must receive the data and then transmit the data to the wireless modem of the reception unit. Accordingly, the monitoring agent cuts off the connection after determining that the communication between the transmission wireless modem and the reception wireless modem has been interrupted, when the wireless modem of the transmission unit has waited for data reception for a long time.

The CDMA wireless modem 130, which has received the image data to be transmitted, transmits packets including the image data to the image reception unit, and determines whether the transmitted data has been received by the wireless terminal 210 (step S380). The data reception state bit RD4 from the acknowledgement packet in Figure5B (which is transmitted from the wireless terminal 210 of the image reception unit) is checked. From the result of checking the data reception state bit RD4, when the transmission/reception has been completed, it is determined whether the entire image file has been received or not (step S390). With this determination, the procedure is ended. In step S380, if the transmission has failed, that is, when the wireless terminal 210 of the image reception unit determines that a transmission error has occurred, the wireless terminal 210 transmits the packet number RD3 in which an error has occurred and a message indicating that an error has occurred in the data reception state code RD4 to the image transmission unit. The image reception unit determines whether a transmission error has occurred by comparing the error check code VD5, included in the transmitted image data packets. Accordingly, the short message receiving unit 120 extracts relevant information and enables image data, corresponding to the packet number in which the error has occurred, to be retransmitted.

When the transmission has not been completed in step S390, the procedure returns to step S370. Accordingly, data corresponding to the next packet is transmitted.

As described above, according to the image transmission apparatus and method of an embodiment of the present invention, since the image data are not transmitted all at once, but rather are transmitted as small packet units, the image data can be transmitted by means of a CDMA wireless modem having a small capacity. Further, transmission errors due to a wireless transmission/reception can be reduced. Furthermore, when a transmission error has occurred, since an entire image data are not retransmitted, but only packets having the transmission error are retransmitted, embodiments of the present invention improve transmission effectiveness and stability of the image data.

## Claims

1. An image transmission apparatus for transmitting an image captured by a camera to a wireless terminal of a user via a mobile communication network, the apparatus comprising:
an image input unit adapted to receive an image signal;
an image conversion unit for converting an image received from the image input unit into a form receivable by the wireless terminal; and
a wireless data unit adapted to restructure the image received from the image input unit into at least one small packet unit, and to transmit the at least one small packet to the terminal of the user.

2. The image transmission apparatus of claim 1, wherein the wireless data unit is further adapted to transmit and receive data.

3. The image transmission apparatus of claim 1, wherein the wireless data unit is further adapted to receive an image request signal and to restructure the image received from the image input unit in response to a received request signal.

4. The image transmission apparatus of claim 1, wherein:
the mobile communication network includes a CDMA network; and the wireless data unit transmits the at least one small packet over the CDMA network.

5. The image transmission apparatus of claim 1, wherein the wireless data unit includes a CDMA modem.

6. The image transmission apparatus of claim 1, wherein the small packet unit comprises less than 1kb of data.

7. An image transmission method for transmitting an image captured by a camera to a wireless terminal of a user via a mobile communication network, the method comprising the steps of:
receiving an image signal;
converting the image signal into as form receivable by the wireless terminal;
restructuring the converted image signal into at least one small packet unit; and
transmitting the at least one small packet to the terminal of the user.

8. The image transmission method of claim 7, further comprising the step of receiving an image request signal, and performing the restructuring step based on the received image request signal.

9. The image transmission method of claim 7, wherein the transmitting step transmits said at least one small packet over a CDMA network.

10. The image transmission method of claim 7, wherein the transmitting step further comprises transmitting the at least one small packet via a CDMA modem.

11. A method of transmitting an image signal to a wireless terminal of a user over a mobile communication network, comprising the steps of:
receiving an image request signal from a wireless terminal of a user;
converting an image signal into one of a plurality of predetermined formats based on said image request signal;
packetizing said converted image signal; and
transmitting said packetized image signal over said mobile communication network to said wireless terminal of said user.

12. The method of claim 11, further comprising the step of compressing said converted image signal prior to performing said packetizing step, and wherein the packetizing step packetizes said compressed converted image signal.

13. The method of claim 11, wherein said packetizing step packetizes said converted image signal into packets comprising less than 1kb of data.

14. A signal for requesting an image to be transmitted to a wireless terminal of a user over a mobile communication network, the signal comprising:
a start code;
data representing a phone number of a reception unit;
data representing a control command, adapted to cause an image from a camera to be transmitted to the wireless terminal of the user;
data representing an image size;
data representing an supported image type; and
an end code.

15. The signal of claim 14, wherein said control command comprises a camera selection command, adapted to select one of a plurality of available cameras.

16. The signal of claim 14, wherein said image size defines a window size of an image to be transmitted.

17. The signal of claim 14, wherein said image type comprises JPG and WBMP.

18. A signal for transmitting image data to a wireless terminal of a user over a mobile communication network, the signal comprising a plurality of packets, each packet comprising:
a start code, a header, a packet number, image data, an error check code, and an end code, and wherein said header comprises data representing a phone number of a receiving unit, a total number of packets to be transmitted, and an entire video size.

19. The signal of claim 18, wherein said mobile communication network includes a CDMA network, and the signal is transmitted over the CDMA network.

20. A remotely accessible imaging apparatus comprising:
an image signal input for receiving an image signal from a camera;
a mobile communications network transceiver; and
processing means,
wherein the processing means is configured to be responsive to reception of a message service message by the transceiver to cause the transceiver to transmit an image signal derived from an image signal received at the signal input means.

21. An apparatus according to claim 20, including another image signal input for receiving an image signal from another camera, wherein the processing means is configured to be responsive to the content of a received message service message to select between images received at respective ones of the image signal inputs for deriving the image signal to be transmitted.

22. An apparatus according to claim 20 or 21, wherein the processing means is configured for distributing an image signal to be transmitted across a plurality of packets.

23. An apparatus according to claim 22, wherein said packets are in the range 512 bytes to 1556 byte.

24. An apparatus according to any one of claims 20 to 23, wherein the processing means is configured for analysing acknowledgment packets, received by the transceiver, and retransmitting image signal packet in dependence on an error report in an acknowledgement packet.

25. An apparatus according to any one of claims 20 to 24, wherein the processing means is configured for setting up a data call for the transmission of said image signal.

26. An apparatus for remotely accessing an apparatus according to any one of claims 20 to 24, the apparatus comprising:
a mobile communications network transceiver;
display means; and
processing means,
wherein the processing means is configured for causing the transceiver to send a message service message requesting transmission of an image to a remotely accessible imaging apparatus and displaying an image received therefrom in response to said request as a plurality of packets.

27. An apparatus according to claim 26, wherein the processing means is configured for forming and causing the transceiver to send acknowledgement signals reporting errors in the image-carrying packets.

28. An apparatus according to claim 27, wherein the transceiver sends the acknowledgement signals as message service messages.

29. An apparatus according to claim 26, 27 or 28, wherein processing means is configured such that a transmission requesting message includes an image source specifier.

30. An apparatus according to any one of claims 26 to 29, wherein the processing means is configured to cause the transceiver to answer a data call for the reception of requested image signals.
